# EUROPÄISCHE PATENTSCHRIFT

(11) **EP 2 198 577 B1**
(45) Veröffentlichungstag und Bekanntmachung des Hinweises auf die Patenterteilung: **16.01.2013**
(21) Anmeldenummer: 08840472.8
(22) Anmeldetag: 07.10.2008
(51) Int. Cl.: H04L 12/58

(54) **INTERNETGESTÜTZTES INFORMATIONSSYSTEM UND VERFAHREN ZUR ERMITTLUNG EINES DATENEMPFÄNGERSPEZIFISCHEN DATENSATZES**
INTERNET-BASED INFORMATION SYSTEM AND METHOD FOR ASCERTAINING A DATA-RECIPIENT-SPECIFIC DATA RECORD
SYSTÈME D'INFORMATION ASSISTÉ PAR INTERNET, ET PROCÉDÉ DE DÉTERMINATION D'UN ENSEMBLE DE DONNÉES SPÉCIFIQUES D'UN RÉCEPTEUR DE DONNÉES

(30) Priorität: 09.10.2007 DE 102007048380
(43) Veröffentlichungstag der Anmeldung: 23.06.2010
(73) Patentinhaber: DCI Database for Commerce and Industry AG, 82319 Starnberg (DE)
(72) Erfinder: MOHR, Michael, 82335 Berg (DE)
(74) Vertreter: Grättinger Möhring von Poschinger Patentanwälte Partnerschaft
(86) Internationale Anmeldenummer: PCT/EP2008/008441
(87) Internationale Veröffentlichungsnummer: WO 2009/049792

(56) Entgegenhaltungen:
- EP-A- 1 801 745
- WO-A-2005/091184
- US-A- 5 793 972

## Beschreibung

Die vorliegende Erfindung betrifft ein intergestütztes Informationssystem gemäß dem Oberbegriff von Anspruch 1 sowie ein Verfahren zum Ermittlung eines datenempfängerspezifischen Datensatzes.

Ein solches internetgestütztes Informationssystem ist aus dem Stand der Technik bekannt und in der WO 2005/091184 A1, die vollumfänglich zum Gegenstand der vorliegenden Offenbarung gemacht wird, beschrieben. Dieses System, welches im wesentlichen auf der Bereitstellung und nachfolgend nochmals näher erläuterten Interaktion eines zentralen Informationsservers mit einer Vielzahl an Portalservern beruht, zeichnet sich unter anderem dadurch aus, dass verschiedenste Daten-E-Mails (mit Werbung, aktuellen Angeboten oder sonstigen Informationen bzw. Daten) einer Vielzahl von Datenanbietern auf einfache Weise und vollständig automatisiert über die Portalserver einer Vielzahl von Datenempfängern zugänglich gemacht werden können. Hierzu muss ein Datenanbieter seine Daten-E-Mails einfach an eine ihm zugeordnete, also anbieterspezifische E-Mail-Adresse einer E-Mail-Schnittstelleneinheit des zentralen Informationsservers versenden. Pro Datenanbieter kann auch eine Mehrzahl an anbieterspezifischen E-Mail-Adressen vergeben sein. Die Daten-E-Mails der Vielzahl von Datenanbieter werden in einer Speichereinheit des zentralen Informationsservers abgespeichert und sind von ausgewählten Portalservern über einen geeigneten Link auf ihrer Webseite bzw. Homepage darstellbar, wobei unter Zuhilfenahme einer Selektionsinrichtung des zentralen Informationsservers eine portalspezifische Zugriffssteuerung auf die Daten-E-Mails vorgesehen ist. Die Darstellung der Daten-E-Mails erfolgt auf der Homepage bzw. innerhalb des Internetangebots des jeweiligen Portalservers durch einen in das Internetangebot auf geeignete Weise integrierten Link zu einer portalspezifischen URL einer Webschnittstelleneinheit des zentralen Informationsservers, wobei der betreffenden URL dabei eine (von dem zentralen Informationsserver dynamisch generierte) Webseite zur Anzeige der Daten-E-Mails zugeordnet ist.

Die Datenanbieter erhalten damit von dem Betreiber des zentralen Informationsservers auf besonders einfache Art und Weise die Möglichkeit, topaktuelle Inhalte in Form von einfach zu erstellenden Daten-E-Mails in die Internetangebote von ausgewählten Portalservern zu "pushen". Die Daten-E-Mails können in allen gängigen E-Mail-Formaten (z.B. im HTML-Standard oder als plaintext) abgefasst sein und ggfs. auch Skripte und/oder Dateien anderer Formate, wie z.B. pdf-Dateien, gängige Grafik-, Audio-, Video- oder sonstige über die Portalserver anzuzeigende Medieninhalte, beinhalten. Die von dem zentralen Informationsserver dynamisch generierten Webseiten erlauben die Verarbeitung der verschiedenen E-Mail- und Datenformate und deren Darstellung über das Internetangebot der Portalserver. Gegebenenfalls kann hierbei auch eine automatische Datenkonvertierung erfolgen, indem z.B. von den Datenanbietern an den zentralen Informationsserver versendete Daten eines bestimmten Formats zum Zwecke ihrer Darstellung über die Portalserver in ein anderes Datenformat überführt werden. So können z.B. verschiedenste Videoformate in ein sogenanntes flash-video umgewandelt werden; auch eine Konvertierung von pdf-Dateien in ein flash-Format kann vorgesehen sein, um nur einige Beispiele zu nennen. Dabei ist es den Datenanbietern insbesondere auch möglich, in ihre Daten-E-Mails beliebige Hyperlinks zu spezifischen Webseiten, insbesondere zu Webseiten ihres eigenen Internetangebots, zu integrieren, so dass die Datenempfänger bei der Lektüre eines - über einen Portalserver dargestellten - Daten-E-Mails die Gelegenheit haben, durch Anwahl eines Hyperlinks (was in der Regel durch "Anklicken" des sich dem Datenempfänger in Form eines Text- oder Grafikelements präsentierenden Hyperlinks erfolgt) unmittelbar zu der URL der verlinkten Webseite weitergeleitet zu werden.

Die von den Portalservern themen- bzw. inhaltsspezifisch angesprochenen Datenempfänger können die z.B. ein Angebote oder Werbung beinhaltenden Daten-E-Mails verschiedener Datenanbieter einsehen ohne hierfür - z.B. durch Abonnement entsprechender Newsletter - das eigene E-Mail-Postfach mit einer ggfs. unerwünschten E-Mail-Flut zu verstopfen. Außerdem können sie anonym an dem betreffenden System teilhaben, sofern sie sich nicht auf eigenen Wunsch bei dem Betreiber des zentralen Informationsservers oder bei dem Betreiber des genutzten Portalservers registrieren - falls das jeweilige System dies gestattet oder vorschreibt.

Datenanbieter, Portalserverbetreiber und/oder der Betreiber des zentralen Informationsservers sind jedoch häufig daran interessiert, genauere Informationen in Form von datenempfängerspezifischen Datensätzen über die Identität und/oder sonstige Eigenschaften der sich für ihre (Internet-)Angebote oder Daten-E-Mails interessierenden Datenempfänger zu erhalten. Dies ist mit dem bestehenden System und gängigen Konzepten der Nutzerregistrierung bisher nicht im gewünschten Umfang oder nur mit beträchtlichem Aufwand möglich. Es ist festzustellen, dass eine Implementierung von gängigen Konzepten der Nutzerregistrierung seitens der Datenanbieter und/oder Portalserverbetreiber nicht nur aufwendig, sondern häufig auch nicht gewünscht ist, da im Falle einer obligatorischen Nutzerregistrierung ein Teil der angesprochenen Verkehrkreise (Datenempfänger) von dem betreffenden Angebot de facto ausgeschlossen wäre, da nur wenige Datenempfänger bei der Nutzung des allgemeinen Internetangebots der Portalserver bereit sind, aus der Anonymität herauszutreten.

Vor diesem Hintergrund ist es die Aufgabe der vorliegenden Erfindung bei einem gattungsgemäßen System einen zusätzlichen Mehrwert in Form einer einfach zu implementierenden und benutzerfreundlichen Möglichkeit zur Ermittlung eines datenempfängerspezifischen Datensatzes zu schaffen, und zwar ohne dabei den Erreichungsgrad des Informationssystems zu vermindern.

Diese Aufgabe wird mit einem internetgestützten Informationssystem nach Anspruch 1 gelöst.

Das erfindungsgemäße System zeichnet sich in Ergänzung zu dem bereits vorbekannten System der eingangs genannten Art dadurch aus, dass der zentrale Informationsserver ferner eine Hyperlink-Erkennungs- und Manipulationsinrichtung aufweist, mit welcher innerhalb der von den Datenanbietern versandten Daten-E-Mails vorhandene Hyperlinks automatisch erkennbar und derart automatisch manipulierbar sind, dass eine Anwahl eines in einem über einen Portalserver dargestellten Daten-E-Mail vorhandenen und manipulierten Hyperlinks zunächst eine Abfrageroutine zur Ermittlung eines datenempfängerspezifischen Datensatzes auslöst, wobei der Datenempfänger erst dann zu der URL des ursprünglich in dem Daten-E-Mail vorhandenen Hyperlinks weitergeleitet wird, wenn die Abfrageroutine erfolgreich beendet wurde.

Zunächst ist hierbei festzustellen, dass den Datenempfängern bei einem erfindungsgemäßen System alle Angebote der jeweiligen Portalserver sowie die Einsicht in alle über den jeweiligen Portalserver einsehbaren Daten-E-Mails der verschiedenen Datenanbieter in gewohnter Weise zur Verfügung stehen - ohne dass ein Datenempfänger durch Preisgabe eines ihn betreffenden Datensatzes hierfür aus der Anonymität herauszutreten bräuchte.

Die - von einem entsprechenden Abfrageroutinengenerator automatisch erzeugte - Abfrageroutine zur Ermittlung des datenempfängerspezifischen Datensatzes wird erst dann automatisch initiiert, wenn der Datenempfänger durch Anwahl eines manipulierten Hyperlinks in einem ihm über den Portalserver dargestellten Daten-E-Mail näheres Interesse an dem speziellen, von einem Datenanbieter in seinem Daten-Email verlinkten Internetangebot signalisiert. Mit der Hyperlink-Erkennungs- und Manipulationseinrichtung werden hierzu innerhalb von Daten-E-Mails der verschiedenen Datenanbieter ursprünglich vorhandene Hyperlinks erkannt und vor der Darstellung des betreffenden Daten-E-Mails über einen Portalserver derart manipuliert, dass der Datenempfänger bei Anwahl des manipulierten Hyperlinks nicht mehr unmittelbar zu der mit dem Hyperlink ursprünglich verknüpften URL weitergeleitet wird, sondern eine entsprechende Weiterleitung erst nach erfolgreichem Abschluss der Abfrageroutine erfolgt. Unter erfolgreichem Abschluss der Abfrageroutine ist dabei zu verstehen, dass der zu ermittelnde datenempfängerspezifische Datensatz mit Erfolg ermittelt wurde.

Von besonderem Vorteil erweist es sich bei dem erfindungsgemäßen System, dass zur Ermittlung des datenempfängerspezifischen Datensatzes weder datenanbieterseitig noch portalserverbetreiberseitig eine entsprechende Abfrageroutine implementiert werden muss. Im Gegenteil, es bedarf infolge der automatischen Hyperlinkerkennung und -manipulation nicht des geringsten Zutuns der Datenanbieter oder Portalserverbetreiber.

Vielmehr kann die Hyperlink-Erkennungs- und Manipulationseinrichtung sowie der Abfrageroutinengenerator datenanbieterunabhängig, portalserverunabhängig und zentral von dem Betreiber des zentralen Informationsservers bereitgestellt werden. Als vorteilhaft erweist es sich dabei ferner, dass auch Daten-E-Mails, die bereits vor Implementierung der vorliegenden Erfindung in einem gattungsgemäßen Informationssystem vorhanden waren, bei ihrer zukünftigen Darstellung über die betreffenden Portalserver - durch entsprechende Erkennung und Modifikation von darin enthaltenen Hyperlinks - an dem erfindungsgemäßen System mit dem Ziel der Ermittlung von datenempfängerspezifischen Datensätzen teilhaben können.

Zur automatischen Erkennung von Hyperlinks in den Daten-E-Mails, zur automatischen Manipulation derselben und zur Implementierung einer im jeweiligen Einzelfall automatisch initiierten Abfrageroutine inkl. der späteren Weiterleitung an die mit dem Hyperlink ursprünglich verknüpfte URL stehen dem Fachmann die insoweit als solche aus dem Stand der Technik bekannten Methoden zur Verfügung (vgl. z.B. EP 0889418 A2, WO01/03001 A1 und US 2004/0083428 A1). Der Aufwand zur Ermittlung des gewünschten datenempfängerspezifischen Datensatzes ist für alle Systembeteiligte minimal; die in dem erfindungsgemäßen System vorgesehenen Mittel zur Ermittlung des gewünschten datenempfängerspezifischen Datensatzes sind beliebig skalierbar und bedürfen auch bei Teilnahme neuer Datenanbieter und/oder Portalserver keiner Veränderung.

Das erfindungsgemäße System bietet somit eine Möglichkeit zur Beschaffung von wertvollen Datensätzen über potentielle Interessenten an den speziellen Angeboten verschiedener Datenanbieter. Die ermittelten datenempfängerspezifischen Datensätze sind im Übrigen nicht nur für die Datenanbieter, sondern auch für die Portalsverbetreiber von Interesse. Der Betreiber des zentralen Informationsservers, der im Rahmen des erfindungsgemäßen Systems die datenempfängerspezifischen Datensätze ermittelt, kann diese Datensätze dann - insbesondere gebührenpflichtig - den Datenanbietern und/oder Portalserverbetreibern zur Verfügung stellen.

In einer ersten vorteilhaften Ausgestaltung des erfindungsgemäßen Systems ist vorgesehen, dass der im Rahmen der Abfrageroutine zu ermittelnde datenempfängerspezifische Datensatz den Namen und die Anschrift des Datenempfängers enthält. Den Datenanbietern und/oder Portalserverbetreibern können damit Kontaktinformationen für potentiell an ihren Angeboten bzw. über ihren Portalserver auf spezielle Angebote zugreifende Interessenten vermittelt werden - und dies obwohl die ursprünglich in den Daten-E-Mail verlinkten Dateninhalte frei zugänglich sind. Ebenfalls von Vorteil ist es, wenn der datenempfängerspezifische Datensatz im Hinblick auf eine möglichst einfache Art der Kontaktaufnahme - entweder zusätzlich oder alternativ - die E-Mail-Adresse des Datenempfängers enthält.

Die erfindungsgemäß nach Manipulation des ursprünglich vorhandenen Links bei dessen Anwahl initiierte Abfrageroutine muss jedoch nicht auf eine reine Abfrageroutine zur Ermittlung des datenempfängerspezifischen Datensatzes beschränkt sein, sondern kann ggfs. zusätzlich eine Interaktionsroutine umfassen. Im Rahmen der Abfrageroutine kann z.B. vorgesehen sein, dass der Datenempfänger erst nach einem obligatorischen Abschluss eines Kauf- oder Abonnementvertrags zu der ursprünglich verlinkten URL weitergeleitet wird. Es wird mithin eine Möglichkeit geschaffen, mit der auf anderem Wege frei zugängliche Internetinhalte erst nach Abschluss eines Abonnements oder gegen ein einmaliges Entgelt abrufbar werden. Dabei ist von Vorteil, wenn in den manipulierten Hyperlinks die ursprünglich verknüpfte URL nicht im Klartext erkennbar ist.

Besonders bevorzugt ist bei einem erfindungsgemäßen System vorgesehen, dass der Datenempfänger im Rahmen der Ausführung der Abfrageroutine - z.B. durch Bereitstellung eines auszufüllenden Formulars - zur Eingabe des datenempfängerspezifischen Datensatzes aufgefordert wird. Erfahrungen, insbesondere bei registrierungspflichtigen Internetangeboten aus dem so genannten B2B-Bereich, haben gezeigt, dass ein hoher Anteil (häufig von 80% oder mehr) der Datenempfänger mit ernsthaftem Interesse an speziellen Angeboten hierbei wahrheitsgemäße Angaben machen, so dass im vorliegenden Fall von einer hohen Ausbeute an verwertbaren datenempfängerspezifischen Datensätzen auszugehen ist. Auch die Bereitschaft zur Zahlung eines Entgelts ist bei einem Angebot von hochspeziellen Inhalten erhöht. Die erhöhte Quote an auskunftsfreudigen oder zahlungswilligen Datenempfängern ist vorliegend auch in dem Umstand begründet, dass den Datenempfängern über die Portalserver zunächst noch anonym ein vollständiger Einblick in die Daten-E-Mails der Datenanbieter gewährt wird; nur hieran ein gewisses Grundinteresse aufweisende Datenempfänger werden einen Hyperlink innerhalb des Daten-E-Mails anwählen bzw. anklicken, woraufhin ja erst die Abfrageroutine ausgelöst wird.

Zur Erkennung von nicht wahrheitsgemäß abgegebenen Datensätzen stehen die insoweit bekannten Adressverifikationsalgorithmen zur Verfügung, bei denen z.B. eine angegebene Anschrift durch Vergleich von Postleitzahl und weiteren Adressfeldern (wie des anzugebenden Wohnorts oder der Strasse) mit allgemein verfügbaren Datensätzen auf ihre Plausibilität oder Richtigkeit überprüft werden können. Auch für angegebene E-Mail-Adressen existieren entsprechende Algorithmen zur Erkennung von offensichtlich falschen, z.B. nicht dem üblichen Formstandard entsprechenden Angaben.

In gewissen Fällen kann gemäß einer weiteren bevorzugten Ausgestaltung der Erfindung der anbieterspezifische Datensatz jedoch auch automatisch, d.h. ohne weiteres Zutun des Datenempfängers, ermittelt werden. Eine solche automatische Ermittlung des datenempfängerspezifischen Datensatzes im Rahmen der Abfrageroutine ist insbesondere dann zu realisieren, wenn der Datenempfänger unter Angabe der den datenempfängerspezifischen Datensatz betreffenden Daten bei dem zentralen Informationsserver oder dem Portalserver registriert und entsprechend automatisch identifizierbar ist. Dies geht freilich nur, wenn der den betreffenden Hyperlink innerhalb eines Daten-E-Mails anwählende Datenempfänger entsprechend angemeldet bzw. eingeloggt ist, was bei dem vorliegenden Informationssystem optional vorgesehen sein kann. Zur datenempfängerseitigen Bereitstellung dieser automatisch zu ermittelnden Daten stehen im Falle einer Nutzerregistrierung die dem Fachmann insoweit bekannten Mechanismen zur Verfügung, die z.B. auf einer Nutzung von im temporären Internetspeicher des Datenempfängers hinterlegten "Cookies" beruhen können. Bevorzugt wird bei einem erfindungsgemäßen System im Rahmen der Abfrageroutine aus Gründen der Nutzerfreundlichkeit zunächst der Versuch unternommen, den gewünschten datenempfängerspezifischen Datensatz automatisch zu ermitteln und der Datenempfänger nur dann zur Eingabe der betreffenden Daten aufgefordert, wenn diese nicht automatisch ermittelbar sind. Dabei kann die Abfrageroutine bevorzugt auch so ausgestaltet sein, dass, falls nur ein Teil der gewünschten Daten automatisch ermittelbar ist, diese Felder bei einer entsprechenden Eingabeaufforderung bereits vorausgefüllt sind. Außerdem kann bei einem erfindungsgemäßen System vorgesehen sein, dass der Datenempfänger im Falle der automatischen Ermittlung des ihn betreffenden Datensatzes vor seiner Weiterleitung an die ursprünglich in dem Daten-E-Mail mit dem Hyperlink verknüpfte URL zur Bestätigung der automatisch ermittelten Daten aufgefordert wird.

Das erfindungsgemäße System kann dadurch realisiert sein, dass der manipulierte Hyperlink auf eine mit einer dynamisch generierten Webseite verknüpfte URL der Web-Schnittstelleneinheit des zentralen Informationsservers verweist, wobei die dynamisch generierte Webseite entsprechende Abfragemittel zur Ermittlung des datenempfängerspezifischen Datensatzes (z.B. in Form eines automatisch ausführbaren Skripts zur Ermittlung bereits vorhandener Daten und/oder zur Erstellung eines entsprechenden Eingabeformulars) und entsprechende Weiterleitungsmittel zur Weiterleitung des Datenempfängers auf die ursprüngliche URL nach erfolgreichem Abschluss der Abfrageroutine vorgesehen sind. Die ursprünglich mit dem - nicht manipulierten - Hyperlink verknüpfte URL wird dabei bevorzugt als Teil des manipulierten Hyperlinks an die Weiterleitungsmittel der dynamisch erzeugten Webseite übergeben.

In einer vorteilhaften Ausführungsvariante der vorliegenden Erfindung kann vorgesehen sein, dass für die Datenanbieter und/oder die Betreiber von Portalservern selbst bestimmbar ist, ob Hyperlinks in den von ihnen in das System eingebrachten Daten-E-Mails bzw. in den über ihren Portalserver dargestellten Daten-E-Mails von der Hyperlink-Erkennungs- und Manipulationseinheit zur Auslösung der Abfrageroutine manipuliert werden sollen oder nicht. Nicht jeder Datenanbieter oder Portalserverbetreiber ist nämlich an den mit dem erfindungsgemäßen System ermittelbaren datenempfängerspezifischen Datensätzen interessiert. Ebenso könnte z.B. auch von Datenanbietern festgelegt werden, dass die Hyperlinks in ihren Daten-E-Mails nur dann entsprechend manipuliert werden sollen, wenn diese über spezielle Portalserver einem Datenempfänger dargestellt werden. Ein und dasselbe Daten-E-Mail kann daher z.B. über verschiedene Portalserver einmal mit und einmal ohne manipulierten Hyperlinks dargestellt sein. Ebenfalls kann den Datenanbietern im Rahmen eines erfindungsgemäßen Systems z.B. auch die Möglichkeit gegeben werden, diese Auswahl für verschiedene Hyperlinks innerhalb eines Daten-E-Mails gesondert zu treffen, z.B. indem gewisse im Quelltext der Daten-E-Mails verwendbare Schlüsselwörter definiert werden, mit denen die Hyperlink-Erkennungs und Manipulationseinheit steuerbar ist.

Um die für eine strukturierte Sammlung der datenempfängerspezifischen Datensätze notwendigen Voraussetzungen zu schaffen, ist gemäß einer weiteren bevorzugten Ausführungsform der Erfindung vorgesehen, dass der zentrale Informationsserver ferner eine Korrelationsdatensatzerstellungseinheit aufweist, mittels derer ein Korrelationsdatensatz automatisch erstellbar ist, in dem der im Rahmen der Abfrageroutine ermittelte datenempfängerspezifische Datensatz mit wenigstens einer der nachfolgenden Daten verknüpft ist:
- Identität des Datenanbieters der Daten-E-Mail, in welcher sich der vom Datenempfänger angeklickte und manipulierte Hyperlink befand,
- Identität des Portalservers, über den das betreffende Daten-E-Mail dargestellt wurde,
- Identität des betreffenden Daten-E-Mails, in welchem sich der automatisch erkannte und manipulierte Hyperlink befand,
- URL, auf die der ursprüngliche Hyperlink verwies.

Sofern einzelne Portalserver mehrere getrennte Unterangebote an verschieden selektierten Daten-E-Mails des zentralen Informationsservers anbieten, kann es auch von Vorteil sein, wenn - neben der Identität des Portalservers - auch die Identität des entsprechenden Unterangebots in den Korrelationsdatensatz aufgenommen wird. Ebenfalls können Datum und/oder Zeit der Anwahl des manipulierten Hyperlinks durch den Datenempfänger von Interesse sein.

Im Sinne einer möglichst universellen Datensammlung werden in dem Korrelationsdatensatz bevorzugt alle der vorgenannten Daten erfasst und in einer automatisch erstellten Datenbank zur weiteren Verarbeitung gesammelt.

Neben dem vorbeschriebenen System betrifft die vorliegende Erfindung auch ein Verfahren zur Ermittlung eines datenempfängerspezifischen Datensatzes in einem internetgestützten Informationssystem umfassend die folgenden Verfahrensschritte:
- Bereitstellen eines zentralen Informationsservers mit einer E-Mail-Schnittstelleneinheit, einer Web-Schnittstelleneinheit und einer Speichereinrichtung, welche mindestens eine Angebots-Speichereinheit umfasst;
- Bereitstellen einer Vielzahl von Portalservern, die jeweils über eine Web-Schnittstelleneinheit verfügen und mit der Web-Schnittstelleneinheit des zentralen Informationsservers verbindbar sind;
- Versenden von datenanbieterspezifische Daten enthaltenden Daten-E-Mails durch eine Vielzahl von Datenverarbeitungsanlagen, welche jeweils einem Datenanbieter, zugeordnet sind, an jeweils mindestens eine datenanbieterspezifische E-Mail-Adresse des zentralen Informationsservers;
- Automatisches Speichern der beim zentralen Informationsserver eingehenden Daten-E-Mails in der Angebots-Speichereinheit;
- Ermöglichen des Herstellens von Verbindungen zwischen einer Vielzahl von Datenverarbeitungsanlagen, welche jeweils einem Datenempfänger zugeordnet sind und über eine Web-Schnittstelle verfügen, und dem zentralen Informationsserver unter Verwendung eines Links des jeweils von dem betreffenden Datenempfänger aufgerufenen Portalservers;
- Automatische, von der Identität des jeweiligen Portalservers abhängige Selektion von und Zugriffsfreigabe auf in der Angebots-Speichereinheit gespeicherte Daten-E-Mails, wobei in den Daten-E-Mails vorhandene Hyperlinks automatisch erkannt und derart manipuliert werden, dass eine Anwahl des manipulierten Hyperlinks durch den Datenempfänger zunächst eine Abfrageroutine zur Ermittlung eines datenempfängerspezifischen Datensatzes auslöst, wobei der Datenempfänger erst dann zu der URL des ursprünglich in dem Daten-E-Mail vorhandenen Hyperlinks weitergeleitet wird, wenn die Abfrageroutine erfolgreich beendet wurde;
- Aufrufen der selektierten, freigegebenen und mit manipulierten Hyperlinks versehenen Daten-E-Mails durch die Vielzahl von Datenempfängern über das World Wide Web.

Es versteht sich von selbst, dass alle vorstehend in Zusammenhang mit dem erfindungsgemäßen System erläuterten Vorteile und bevorzugten Ausgestaltungen auch auf das erfindungsgemäße Verfahren entsprechend übertragbar sind, so dass insoweit zur Vermeidung von Wiederholungen auf die vorstehenden Ausführungen verwiesen wird.

Außerdem hat die Anmelderin erkannt, dass die erfindungsgemäße technische Lehre nicht zwingend auf das vorstehend erläuterte System zur selektiven Darstellung von Daten-E-Mails beschränkt ist. Vielmehr kann es sich im Rahmen der Erfindung gemäß Anspruch 8 bei den für Datenempfänger über eine Vielzahl von Portalservern zugänglich gemachten Daten einer Vielzahl von Datenanbietern um Dateninhalte im Allgemeinen (also nicht nur in Form von E-Mails oder E-Mail-Dateianhängen) handeln. Dabei ist insbesondere an - mittels des zentralen Informationsservers bereitgestellte - Bannerwerbung zu denken, die entweder mit einem Hyperlink verknüpft ist oder einen solchen beinhaltet. Auch hier kann dann im Rahmen der Erfindung nach automatischer Erkennung und Manipulation der in den Dateninhalten (z.B. Werbebannern) vorhandenen Hyperlinks eine Abfrageroutine zur Ermittlung eines datenempfängerspezifischen Datensatzes bei Anwahl des Hyperlinks ausgelöst werden.

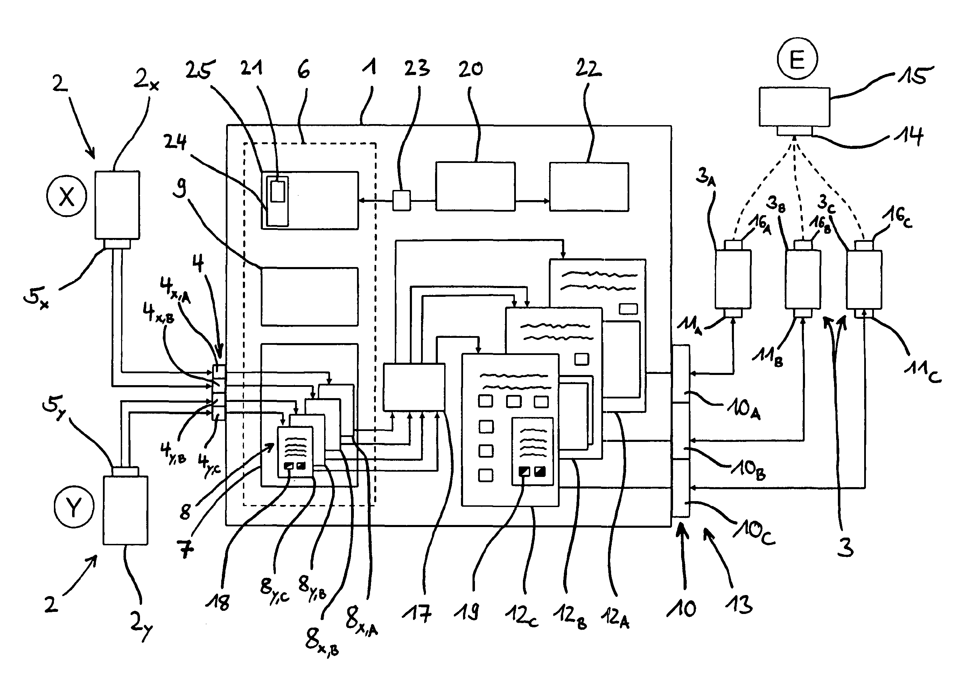

Im folgenden wird die vorliegende Erfindung anhand eines in der Zeichnung veranschaulichten Ausführungsbeispiels der Erfindung näher erläutert, wobei das dargestellte System der Information von potentiellen Kunden über die aktuellen Angebote von Einzelhandelsunternehmen dient.

Das System umfasst einen zentralen Informationsserver 1, zwei Datenverarbeitungsanlagen 2, von denen die Datenverarbeitungsanlage 2_{X} einem (Daten-)Anbieter X und die Datenverarbeitungsanlage 2_{Y} einem (Daten-)Anbieter Y zugeordnet ist, sowie drei Portalserver 3, von denen der Portalserver 3_{A} thematisch auf das Sachgebiet A ausgerichtet ist, der Portalserver 3_{B} auf das Sachgebiet B und der Portalserver 3_{C} auf das Sachgebiet C. Der Anbieter X ist auf den Geschäftsgebieten A und B tätig, der Anbieter Y hingegen auf den Geschäftsgebieten B und C.

Der zentrale Informationsserver umfasst eine E-Mail-Schnittstelleneinheit 4, mit der die Anbieter-Datenverarbeitungsanlagen 2_{X} und 2_{Y} über diesen jeweils zugeordnete E-Mail-Schnittstellen 5_{X} bzw. 5_{Y} kommunizieren können. Den Anbietern X und Y sind dabei jeweils zwei E-Mail-Adressen zugeordnet, nämlich dem Anbieter X die Adressen 4_{X,A} und 4_{X,B} und dem Anbieter Y die Adressen 4_{Y,B} und 4_{Y,C}. So richtet der Anbieter X seine Daten-E-Mails, welche sein Geschäftsgebiet A betreffende Angebote enthalten, an die E-Mail-Adresse 4_{X,A} und seine Daten-E-Mails, welche sein Geschäftsgebiet B betreffende Angebote enthalten, an die E-Mail-Adresse 4_{X,B}; und der Anbieter Y richtet seine Daten-E-Mails, welche sein Geschäftsgebiet B betreffende Angebote enthalten, an die E-Mail-Adresse 4_{Y,B} und seine Daten-E-Mails, welche sein Geschäftsgebiet C betreffende Angebote enthalten, an die E-Mail-Adresse 4_{Y,C}.

Der zentrale Informationsserver 1 umfasst eine Speichereinrichtung 6 mit einer Angebots-Speichereinheit 7, in welcher die die jeweils aktuellen Angebote der angeschlossenen Anbieter enthaltenden Daten-E-Mails 8 abgespeichert werden, nämlich vorliegend die Daten-E-Mails 8_{X,A}, 8_{X,B}, 8_{Y,B} und 8_{Y,C}. Bei Eingang der entsprechenden Daten-E-Mails können ggfs. nicht mehr aktuelle Daten-E-Mails der betreffenden Anbieter (X,Y) aus der Angebots-Speichereinheit 7 in ein Archiv 9 verschoben werden, welches Teil der Speichereinrichtung 6 ist.

Der zentrale Informationsserver 1 weist des weiteren eine Web-Schnittstelleneinheit 10 auf, über die die Portalserver 3 über diesen ihrerseits jeweils zugeordnete Web-Schnittstellen 11 Zugriff auf denen zentralen Informationsserver 1 haben. Jeder der drei Portalserver 3 ist dabei über einen Link auf seinem Interangebot mit dem zentralen Informationsserver 1 verbindbar. Allerdings sind die Links auf den einzelnen Portalservern mit unterschiedlichen URLs verknüpft. So ist der Portalserver 3_{A} mit einer URL 10_{A} verknüpft, der eine Webseite 12_{A} zugeordnet ist, in die das Daten-E-Mail 8_{X,A} - nachdem es ggfs. gemäß den weiter unten beschriebenen Kriterien modifiziert wurde - eingebettet ist. Der Portalserver 3_{B} ist mit einer URL 10_{B} verknüpft, der eine Webseite 12_{B} zugeordnet ist, in die eine Liste mit den (ggfs. modifizierten) Daten-E-Mails 8_{X,B} und 8_{Y,B} eingebettet ist. Und der Portalserver 3_{C} ist mit einer URL 10_{C} verknüpft, der eine Webseite 12_{C} zugeordnet ist, in die das ggfs. modifizierte Daten-E-Mail 8_{Y,C} eingebettet ist. Auf diese Weise entsteht eine Selektionseinrichtung 13 in dem Sinne, dass ein beliebiger potentieller Daten- bzw. Angebotsempfänger E, der unter Verwendung des Web-Browsers 14 seines über einen Internetzugang verfügenden PCs 15 den Internetauftritt bzw. die Homepage 16_{A} des Portalservers 3_{A} besucht und durch Anklicken des dort eingebetteten Links zu dem zentralen Informationsserver 1 weitergeleitet wird, ausschließlich die Webseite 12_{A} mit dem (modifizierten) Daten-E-Mail B_{X,A} einsehen kann, wohingegen er, wenn er durch Anklicken des auf der Homepage 16_{B} des Portalservers 3_{B} eingebetteten Links zu dem zentralen Informationsserver 1 weitergeleitet wird, ausschließlich die Webseite 12_{B} mit den (modifizierten) Daten-E-Mails 8_{X,B} und 8_{Y,B} einsehen kann, usw.

Hierbei ist es ersichtlich nicht zwingend erforderlich, dass der Datenempfänger (E) zur Einsicht der jeweiligen Webseite 12_{A}, 12_{B}, 12_{C} jeweils einen entsprechenden Link innerhalb des Internetangebots 16_{A}, 16_{B} und 16_{C} des jeweiligen Portalservers 3_{A}, 3_{B} bzw. 3_{C} anklickt oder anwählt; vielmehr kann die jeweilige Webseite 12_{A}, 12_{B}, 12_{C} des zentralen Informationsservers 1 auch direkt durch entsprechende Verlinkung (dynamisch) in das Internetangebot 16_{A}, 16_{B} und 16_{C} des jeweiligen Portalservers 3_{A}, 3_{B} bzw. 3_{C} integriert sein und dabei z.B. in einem bestimmten Frame der Webseite oder an einer sonstigen geeigneten Position innerhalb der Webseite 16_{A}, 16_{B} bzw. 16_{C} des Portalservers 3_{A}, 3_{B} bzw. 3_{C} angezeigt werden.

Die Web-Seiten 12_{A}, 12_{B} und 12_{C} sind nach einem übereinstimmenden Schema aufgebaut, so dass sich die Datenempfänger auf ihnen ohne aufwendige Einarbeitung zurechtfinden und bewegen können.

Wie bereits erläutert enthalten die Web-Seiten 12 nicht in jedem Fall die jeweiligen Daten-E-Mails 8 in exakt derjenigen Form, wie sie von den jeweiligen Datenanbietern X, Y an die E-Mail-Schnittstelleneinheit 4 des zentralen Informationsservers 1 versendet wurden. Der zentrale Informationsserver 1 verfügt nämlich über eine Hyperlink-Erkennungs- und Manipulationseinheit 17, mit welcher innerhalb der Daten-E-Mails 8 vorhandene Hyperlinks 18 automatisch erkannt und manipuliert werden können. Falls also vom Datenanbieter Y eine entsprechende Manipulation gewünscht ist, wird z.B. der in der Daten-E-Mail 8_{Y,C} vorhandene und von der Hyperlink-Erkennungs- und Manipulationseinheit 17 darin automatisch erkannte Hyperlink 18 von derselben automatisch zu einem neuen, derart abgeänderten Hyperlink 19 manipuliert, dass der Datenempfänger E beim Anklicken des manipulierten Hyperlinks 19 nicht mehr unmittelbar zu der mit dem ursprünglichen Hyperlink 18 verbundenen URL weitergeleitet wird, sondern dass zunächst eine Abfrageroutine 20 ausgelöst wird. Im Rahmen der - von einem Abfrageroutinengenerator dynamisch erzeugten - Abfrageroutine 20 wird ein datenempfängerspezifischer Datensatz 21 ermittelt, der neben dem Namen und der Anschrift des Datenempfängers E auch dessen E-Mail-Adresse beinhaltet. Dieser Datensatz 21 wird dabei von der Abfrageroutine 20 entweder automatisch ermittelt (falls die entsprechenden Daten z.B. im für den zentralen Informationsserver 1 einsehbaren Teil des Internet-Caches des Datenempfängers E zur Verfügung stehen) oder der Datenempfänger E wird - durch Bereitstellung eines entsprechenden Formulars - selbst zur Eingabe der betreffenden Informationen aufgefordert. Nach erfolgreicher Ermittlung des Datensatzes 21 wird eine Weiterleitungsroutine 22 initiiert, mit welcher der Datenempfänger E zu dem Ziel des ursprünglich in dem Daten-E-Mail 8_{Y,C} vorhandenen Hyperlinks 18 weitergeleitet wird.

Der Datensatz 21 wird nach seiner Ermittlung in einer Korrelationsdatensatzerstellungseinheit 23 des zentralen Informationsservers 1 um weitere Daten (z.B. mit der Identität des den Hyperlink enthaltenden Daten-E-Mails und der Identität des Portalservers) zu einem Korrelationsdatensatz 24 ergänzt und in einer Datenbank 25 innerhalb der Speichereinrichtung 6 zur weiteren Verarbeitung gespeichert. Diese Daten können dann den Datenanbietern und/oder Portalserverbetreibern zugänglich gemacht werden.

## Patentansprüche

1. Internetgestütztes Informationssystem zur für eine Vielzahl von Datenempfängern (E) aufrufbaren selektiven Darstellung von Daten-E-Mails (8) einer Vielzahl von Datenanbietern (X, Y), umfassend
- einen zentralen Informationsserver (1) mit einer E-Mail-Schnittstelleneinheit (4), einer Web-Schnittstelleneinheit (10), einer Speichereinrichtung (6), welche mindestens eine Angebots-Speichereinheit (7) zum Speichern von Daten-E-Mails (8) der Datenanbieter (X, Y) aufweist, und einer Selektionseinrichtung (13),
- eine Vielzahl von Datenverarbeitungsanlagen (2), welche jeweils einem Anbieter (X, Y) zugeordnet sind und über eine zur Kommunikation mit mindestens einer anbieterspezifischen E-Mail-Adresse (4_{X,A}, 4_{X,B}, 4_{Y,B}, 4_{Y,C}) der E-Mail-Schnittstelleneinheit (4) des zentralen Informationsservers (1) fähige E-Mail-Schnittstelle (5_{X}, 5_{Y}) verfügen, und
- eine Vielzahl von Portalservern (3), die jeweils über eine Web-Schnittstelle (11_{A}, 11_{B}, 11_{C}) verfügen und mit der Web-Schnittstelleneinheit (10) des zentralen Informationsservers (1) verbunden sind,
wobei die Portalserver (3) Zugriff auf spezifische, in der Angebots-Speichereinheit (7) abgespeicherte, von der Selektionseinrichtung (13) automatisch in Abhängigkeit von der Identität des jeweiligen Portalservers (3_{A}, 3_{B}, 3_{C}) ermittelte Daten-E-Mails (8_{X,A}, 8_{X,B}, 8_{Y,B}, 8_{Y,C}) haben und diese dann über einen Link auf einer Homepage (16_{A}, 16_{B}, 16_{C}) darstellen können,
**dadurch gekennzeichnet,**
**dass** der zentrale Informationsserver (1) ferner eine Hyperlink-Erkennungs- und Manipulationseinrichtung (17) aufweist, mit welcher innerhalb der Daten-E-Mails (8) vorhandene Hyperlinks (18) automatisch erkennbar und derart automatisch manipulierbar sind, dass eine Anwahl eines in einem über einen Portalserver (3) dargestellten Daten-E-Mail (8) vorhandenen und manipulierten Hyperlinks (19) zunächst eine Abfrageroutine (20) zur Ermittlung eines datenempfängerspezifischen Datensatzes (21) auslöst, indem der manipulierte Hyperlink (19) auf eine mit einer dynamisch generierten Webseite verknüpfte URL der Web-Schnittstelleneinheit (10) des zentralen Informationsservers (1) verweist, wobei die dynamisch generierte Webseite Abfragemittel zur Ermittlung des datenempfängerspezifischen Datensatzes (21) und Weiterleitungsmittel zur Weiterleitung des Datenempfängers (E) auf die ursprüngliche URL nach erfolgreichem Abschluss der Abfrageroutine (20) aufweist, so dass der Datenempfänger (E) erst dann zu der URL des ursprünglich in dem Daten-E-Mail vorhandenen Hyperlinks (18) weitergeleitet wird, wenn die Abfrageroutine (20) erfolgreich beendet wurde.

2. Internetgestütztes Informationssystem nach Anspruch 1,
**dadurch gekennzeichnet,**
**dass** der datenempfängerspezifische Datensatz (21) den Namen und die Anschrift des Datenempfängers enthält.

3. Internetgestütztes Informationssystem nach einem der vorhergehenden Ansprüche,
**dadurch gekennzeichnet,**
**dass** der datenempfängerspezifische Datensatz (21) die E-Mail-Adresse des Datenempfängers enthält.

4. Internetgestütztes Informationssystem nach einem der vorhergehenden Ansprüche,
**dadurch gekennzeichnet,**
**dass** der Datenempfänger (E) im Rahmen der Ausführung der Abfrageroutine (20) zur Eingabe des datenempfängerspezifischen Datensatzes (21) aufgefordert wird.

5. Internetgestütztes Informationssystem nach einem der Ansprüche 1 bis 3,
**dadurch gekennzeichnet,**
**dass** die Abfrageroutine (20) den datenempfängerspezifischen Datensatz (21) automatisch ermittelt, falls der Datenempfänger (E) unter Angabe der den datenempfängerspezifischen Datensatz (E) betreffenden Daten bei dem zentralen Informationsserver (E) oder dem Portalserver (3) registriert und entsprechend identifizierbar ist.

6. Internetgestütztes Informationssystem nach einem der vorhergehenden Ansprüche,
**dadurch gekennzeichnet,**
**dass** der zentrale Informationsserver (1) ferner eine Korrelationsdatensatzerstellungseinheit (23) aufweist, mittels derer ein Korrelationsdatensatz (24) automatisch erstellbar ist, in dem der im Rahmen der Abfrageroutine ermittelte datenempfängerspezifische Datensatz (21) mit wenigstens einer der nachfolgenden Daten verknüpft ist:
- Identität des Datenanbieters der Daten-E-Mail, in welcher sich der vom Datenempfänger angeklickte und manipulierte Hyperlink befand,
- Identität des Portalservers, über den das betreffende Daten-E-Mail dargestellt wurde,
- Identität des betreffenden Daten-E-Mails, in welchem sich der automatisch erkannte und manipulierte Hyperlink befand,
- URL, auf die der vorgenannte Hyperlink verwies.

7. Verfahren zur Ermittlung eines datenempfängerspezifischen Datensatzes in einem internetgestützten Informationssystem umfassend die folgenden Verfahrensschritte:
- Bereitstellen eines zentralen Informationsservers (1) mit einer E-Mail-Schnittstelleneinheit (4), einer Web-Schnittstelleneinheit (10) und einer Speichereinrichtung (6), welche mindestens eine Angebots-Speichereinheit (7) umfasst;
- Bereitstellen einer Vielzahl von Portalservern (3), die jeweils über eine Web-Schnittstelleneinheit (11) verfügen und mit der Web-Schnittstelleneinheit (10) des zentralen Informationsservers (1) verbindbar sind;
- Versenden von datenanbieterspezifische Daten enthaltenden Daten-E-Mails (8) durch eine Vielzahl von Datenverarbeitungsanlagen (2), welche jeweils einem Datenanbieter (X, Y) zugeordnet sind, an jeweils mindestens eine datenanbieterspezifische E-Mail-Adresse (4_{X,A}, 4_{X,B}, 4_{Y,C}, 4_{X,C}) des zentralen Informationsservers (1);
- Automatisches Speichern der beim zentralen Informationsserver (1) eingehenden Daten-E-Mails (8) in der Angebots-Speichereinheit (7);
- Ermöglichen des Herstellens von Verbindungen zwischen einer Vielzahl von Datenverarbeitungsanlagen (15), welche jeweils einem Datenempfänger (E) zugeordnet sind und über eine Web-Schnittstelle (14) verfügen, und dem zentralen Informationsserver (1) unter Verwendung eines Links des jeweils von dem betreffenden Datenempfänger aufgerufenen Portalservers (3);
- Automatische, von der Identität des jeweiligen Portalservers (3) abhängige Selektion von und Zugriffsfreigabe auf in der Angebots-Speichereinheit (7) gespeicherte Daten-E-Mails (8), wobei in den Daten-E-Mails (8) vorhandene Hyperlinks (18) automatisch erkannt und derart manipuliert werden, dass eine Anwahl des manipulierten Hyperlinks (19) durch den Datenempfänger (E) zunächst eine Abfrageroutine (20) zur Ermittlung eines datenempfängerspezifischen Datensatzes (21) auslöst, indem der manipulierte Hyperlink (19) auf eine mit einer dynamisch generierten Webseite verknüpfte URL der Web-Schnittstelleneinheit (10) des zentralen Informationsservers (1) verweist, wobei die dynamisch generierte Webseite Abfragemittel zur Ermittlung des datenempfängerspezifischen Datensatzes (21) und Weiterleitungsmittel zur Weiterleitung des Datenempfängers (E) auf die ursprüngliche URL nach erfolgreichem Abschluss der Abfrageroutine (20) aufweist, so dass der Datenempfänger (E) erst dann zu der URL des ursprünglich in dem Daten-E-Mail (8) vorhandenen Hyperlinks (18) weitergeleitet wird, wenn die Abfrageroutine (20) erfolgreich beendet wurde;
- Aufrufen der selektierten, freigegebenen und mit manipulierten Hyperlinks (19) versehenen Daten-E-Mails (8) durch die Vielzahl von Datenempfängern (E) über das World Wide Web.

8. Internetgestütztes Informationssystem zur für eine Vielzahl von Datenempfängern (E) aufrufbaren selektiven Darstellung von Dateninhalten (8) einer Vielzahl von Datenanbietern (X, Y), umfassend
- einen zentralen Informationsserver (1) mit einer Web-Schnittstelleneinheit (10), einer Speichereinrichtung (6), welche mindestens eine Dateninhalts-Speichereinheit (7) zum Speichern der von den Datenanbietern (X, Y) bereitgestellten Dateninhalte (8) aufweist, und einer Selektionseinrichtung (13),
- eine Vielzahl an Portalservern (3), die jeweils über eine Web-Schnittstelle (11) verfügen und mit der Web-Schnittstelleneinheit (10) des zentralen Informationsservers (1) verbunden sind,
wobei die Portalserver (3) Zugriff auf spezifische, in der Dateninhalts-Speichereinheit (7) des zentralen Informationsservers (1) gespeicherte Dateninhalte (8) haben und diese in ihrer Webseite (16) darstellen können,
**dadurch gekennzeichnet,**
**dass** der zentrale Informationsserver ferner eine Hyperlink-Erkennungs- und Manipulationseinrichtung (17) aufweist, mit welcher innerhalb der Dateninhalte (8) vorhandene Hyperlinks (18) oder mit den Dateninhalten verknüpfte Hyperlinks automatisch erkennbar und derart automatisch manipulierbar sind, dass eine Anwahl eines in einem über einen Portalserver (3) dargestellten Dateninhalt (8) vorhandenen und manipulierten Hyperlinks (19) zunächst eine Abfrageroutine zur Ermittlung eines datenempfängerspezifischen Datensatzes (21) auslöst, indem der manipulierte Hyperlink (19) auf eine mit einer dynamisch generierten Webseite verknüpfte URL der Web-Schnittstelleneinheit (10) des zentralen Informationsservers (1) verweist, wobei die dynamisch generierte Webseite Abfragemittel zur Ermittlung des datenempfängerspezifischen Datensatzes (21) und Weiterleitungsmittel zur Weiterleitung des Datenempfängers (E) auf die ursprüngliche URL nach erfolgreichem Abschluss der Abfrageroutine (20) aufweist, so dass der Datenempfänger (E) erst dann zu der URL des ursprünglich in dem Dateninhalt (8) vorhandenen Hyperlinks (18) weitergeleitet wird, wenn die Abfrageroutine erfolgreich beendet ist.

## Claims

1. Internet-based information system for selectively presenting data e-mails (8) from a plurality of data providers (X, Y), said presentation being able to be called up for a plurality of data recipients (E), comprises
- a central information server (1) having an e-mail interface unit (4), a web interface unit (10), a memory device (6), which has at least one offering supply memory unit (7) for storing data e-mails (8) from the data providers (X, Y), and a selection device (13),
- a plurality of data processing installations (2), which are respectively associated with a provider (X, Y) and which have an e-mail interface (5_{X}, 5_{Y}) which is capable of communicating with at least one provider-specific e-mail address (4_{x,A}, 4_{X,B}, 4_{Y,B}, 4_{Y,C}) for the e-mail interface unit (4) of the central information server (1),
- a plurality of portal servers (3), which respectively have a web interface (11_{A}, 11_{B}, 11_{C}) and which are connected to the web interface unit (10) of the central information server (1),
whereby the portal servers(3) have access to specific data e-mails (8xA, 8xB, 8yB, 8yC) that are stored in the offering supply memory unit (7) and are automatically determined by the selection installation (13) depending on the identity of the respective portal server (3A, 3B, 3C) and can then present these via a link to a homepage (16A, 16B, 16C),
**characterized in that** the central information server (1) furthermore features a hyperlink recognition and manipulation device (17), by means of which hyperlinks (18) present within the data e-mails (8) can be automatically recognized and manipulated in such a way that a selection of a hyperlink (19), which was presented and manipulated in a data e-mail (8) that was presented via a portal server (3) initially triggers a request routine (20) for the determination of data recipient-specific data record (21), wherein the manipulated hyperlink (19) refers to an URL, which is linked with a dynamically generated web page of the web interface unit (10) of the central information server (1), whereby the dynamically generated web page comprises request means for the determination of the data recipient specific data record (21) and redirection means for redirecting the data recipient (E) to the original URL after successful completion of the request routine (20), so that the data recipient (E) is only then redirected to the URL of the hyperlink (18) that was originally present in the data e-mail when the request routine (20) is successfully completed.

2. Internet-based information system according to claim 1, **characterized in that** the data recipient-specific data record (21) contains the name and the address of the data recipient.

3. Internet-based information system according to any of the previous claims, **characterized in that** the data recipient-specific data record (21) contains the e-mail address of the data recipient.

4. Internet-based information system according to any of the previous claims, **characterized in that** the data recipient (E) is prompted in the context of the implementation of the request routine (20) for the input of the data recipient-specific data record (21).

5. Internet-based information system according to one of the claims 1 to 3, **characterized in that** the request routine (20) determines the data recipient-specific data record (21) automatically in the case where the data recipient (E), subject to entry of the data concerning the data recipient-specific data record (E), is registered or correspondingly identifiable at the central information server (E) or the portal server (3).

6. Internet-based information system according to any of the previous claims, **characterized in that** the central information server (1) features furthermore a correlation data set generating unit (23) by means of which a correlation data record (24) can be automatically generated in which the data recipient-specific data record (21) that was determined in the context of the request routine can be linked with at least one of the following data:
- Identity of the data provider of the data e-mail in which the hyperlink that was clicked and manipulated by the data recipient was located,
- Identity of the portal server by means of which the corresponding data e-mail was presented,
- Identity of the respective data e-mail in which the automatically recognized and manipulated hyperlink was located,
- URL to which the original hyperlink referred.

7. Method for the determination of a data recipient-specific data record in an internet-based information system encompassing the following procedure steps:
- Provision of a central information server (1) with an e-mail interface unit (4), a web interface unit (10) and a memory installation (6) that encompasses at least one offering supply memory unit (7);
- Provision of a plurality of portal servers (3) that each have at their disposal a web interface unit (11) and can be connected with the web interface unit (10) of the central information server (1);
- Transmission of data e-mails (8), containing data provider-specific data via a plurality of data processing installations (2) that each are associated with a data provider (X, Y), to each at least one data provider-specific e-mail address (4xA, 4xB, 4yC, 4xC ) of the central information server (1);
- Automatic storage of the data e-mails (8) that arrive at the central information server (1) in the supply offering memory unit (7);
- Facilitating the establishment of connections between a plurality of data processing installations (15), which are associated each with one data recipient (E) and have a web interface (14) at their disposal, and the central information server (1)by means of a link of the portal server (3) respectively selected by the data recipient;
- Automatic selection, which depends on the identity of the respective portal server (3), of, and access release to, data e-mails (8) that are stored in the supply offering memory unit (7), whereby hyperlinks (18) present in the data e-mails (8) are automatically recognized and manipulated in such a manner that a selection of the manipulated hyperlink (19) by the data recipient (E) triggers initially a request routine (20) for the determination of a data recipient-specific data record (21), wherein the manipulated hyperlink (19) refers to an URL, which is linked with a dynamically generated web page of the web interface unit (10) of the central information server (1), whereby the dynamically generated web page comprises request means for the determination of the data recipient specific data record (21) and redirection means for redirecting the data recipient (E) to the original URL after successful completion of the request routine (20), so that the data recipient (E) is only then redirected to the URL of the hyperlink (18) that was originally present in the data e-mail (8)when the request routine (20) is successfully completed;
- Call-up of the data e-mails (8) that were selected, released, and are provided with manipulated hyperlinks (19) by the plurality of data recipients (E) via the World Wide Web.

8. Internet-based information system for the purpose of the selective presentation of data contents (8), which can be called-up by a plurality of data recipients (E), of a plurality of data providers (X, Y), encompassing
- a central information server (1) with a web interface unit (10), a memory installation (6) which features at least one data content memory unit (7) for the purpose of storing the data contents (8) that are provided by the data providers (X, Y), and a selection device (13),
- plurality of portal servers (3) that each control a web interface (11) and are connected with the web interface unit (10) of the central information server (1),
whereby the portal servers (3) have access to specific data contents (8) that are stored in the data content memory unit (7) of the central information server (1) and can present these on their web page (16),
**characterized in that**,
the central information server furthermore features a hyperlink recognition and manipulation device (17), by means of which hyperlinks (18) present within the data contents (8) or hyperlinks that linked with the data contents can be automatically recognized and manipulated in such a way that a selection of a hyperlink (19), which was presented and manipulated in a data e-mail (8) that was presented via a portal server (3) initially triggers a request routine for the determination of data recipient-specific data record (21), wherein the manipulated hyperlink (19) refers to an URL, which is linked with a dynamically generated web page of the web interface unit (10) of the central information server (1), whereby the dynamically generated web page comprises request means for the determination of the data recipient specific data record (21) and redirection means for redirecting the data recipient (E) to the original URL after successful completion of the request routine (20), so that the data recipient (E) is only then redirected to the URL that was originally present in the data content (8) when the request routine is successfully completed.

## Revendications

1. Système d'information basé sur Internet, pour la représentation sélective de courriers électroniques de données (8) appelés par une multitude de récepteurs de données (E), fournis par une multitude de fournisseurs de données (X, Y), comprenant :
- un serveur d'information central (1) avec une unité d'interface de messages électroniques (4), une unité d'interface web (10), une unité de mémoire (6) comportant au moins une unité de mémoire des offres (7), pour la sauvegarde de courriers électroniques de données (8) venant des fournisseurs de données (X, Y), ainsi qu'un dispositif de sélection (13),
- une multitude de systèmes de traitement de données (2) respectivement attribués à un fournisseur (X, Y) et disposant d'une interface de courriers électroniques (5_{X}, 5_{Y}) capable de communiquer avec au moins une adresse de courrier électronique (4_{X,A}, 4_{X,B}, 4_{Y,B}, 4_{Y,C}) spécifique au fournisseur, de l'unité d'interface de messages électroniques (4) du serveur d'information central (1), et
- une multitude de serveurs d'accès (3) disposant respectivement d'une interface web (11A, 11B, 11C), reliés à l'unité d'interface web (10) du serveur d'information central (1),
dans lequel les serveurs d'accès (3) ont accès à des courriers électroniques de données (8_{X,A}, 8_{X,B}, 8_{Y,A}, 8_{Y,C} spécifiques, stockés dans l'unité de mémoire des offres (7) et déterminés automatiquement par le dispositif de sélection (13), en fonction de l'identité de chacun des serveurs d'accès (3A, 3B, 3C), et peuvent ensuite représenter ceux-ci par le biais d'un lien sur une page d'accueil (16A, 16B, 16C),
**caractérisé en ce que**
le serveur d'information central (1) comporte en outre un dispositif de manipulation et de reconnaissance d'hyperlien (17), permettant de reconnaître automatiquement et donc de manipuler automatiquement les hyperliens (18) existants dans les courriers électroniques de données (8), **en ce que** le choix d'un hyperlien (19) existant dans un des courriers électroniques de données (8) représentés par le biais d'un serveur d'accès (3) et manipulé déclenche tout d'abord une procédure d'interrogation (20) pour la détermination d'un ensemble de données (21) spécifique au récepteur, où l'hyperlien manipulé (19) renvoie à une adresse internet associée à une page web dynamique de l'unité d'interface web (10) du serveur d'information central (1), dans lequel la page web générée dynamiquement comporte des moyens d'interrogation pour la détermination de l'ensemble de données spécifiques à un récepteur (21), ainsi que des moyens de redirection pour la redirection du récepteur de données (E) vers l'adresse électronique de départ, après l'exécution réussie du procédé d'interrogation (20), de sorte que le récepteur de données (E) n'est redirigé vers l'adresse électronique de l'hyperlien (18) existant au départ dans le courrier électronique de données qu'une fois que la procédure d'interrogation (20) a été exécutée avec succès.

2. Système d'information basé sur Internet selon la revendication 1,
**caractérisé en ce que**
l'ensemble de données spécifiques à un récepteur (21) contient le nom et l'adresse du récepteur de données.

3. Système d'information basé sur Internet selon l'une des revendications précédentes,
**caractérisé en ce que**
l'ensemble de données spécifiques à un récepteur (21) contient l'adresse de courrier électronique du récepteur de données.

4. Système d'information basé sur Internet selon l'une des revendications précédentes,
**caractérisé en ce que**
le récepteur de données (E) est invité à entrer l'ensemble de données spécifiques à un récepteur (21) dans le cadre de l'exécution du procédé d'interrogation (20).

5. Système d'information basé sur Internet selon l'une des revendications 1 à 3,
**caractérisé en ce que**
le procédé d'interrogation (20) détermine automatiquement l'ensemble de données spécifiques à un récepteur (21), à condition que le récepteur de données (E) soit inscrit et donc identifiable auprès du serveur d'information central (E) ou du serveur d'accès (3), lors de l'indication des données concernant l'ensemble de données spécifiques à un récepteur (E).

6. Système d'information basé sur Internet selon l'une des revendications précédentes,
**caractérisé en ce que**
le serveur d'information central (1) comporte en outre une unité d'établissement d'ensemble de données de corrélation (23), au moyen de laquelle un ensemble de données de corrélation (24) peut être établi automatiquement, par association de l'ensemble de données spécifiques à un récepteur (21) déterminé dans le cadre de la procédure d'interrogation, avec au moins l'une des données suivantes :
- identité du fournisseur de données du courrier électronique de données, dans lequel se trouvait l'hyperlien sélectionné et manipulé par le récepteur de données,
- identité du serveur d'accès, par le biais duquel le courrier électronique de données concerné a été représenté,
- identité du courrier électronique de données concerné, dans lequel se trouvait l'hyperlien reconnu automatiquement et manipulé,
- adresse électronique à laquelle renvoyait ledit hyperlien.

7. Procédé pour la détermination d'un ensemble de données spécifiques à un récepteur dans un système d'information basé sur Internet, comprenant les étapes de procédé suivantes :
- mise à disposition d'un serveur d'information central (1) avec une unité d'interface de messages électroniques (4), une unité d'interface web (10) et une unité de mémoire (6), comprenant au moins une unité de mémoire des offres (7) ;
- mise à disposition d'une multitude de portails d'accès (3) disposant respectivement d'une unité d'interface web (11) et susceptibles d'être reliés à l'unité d'interface web (10) du serveur d'information central (1) ;
- envoi de données spécifiques au fournisseur de données, contenant des courriers électroniques de données (8), par une multitude de systèmes de traitement de données (2), lesquels sont respectivement attribués à un fournisseur de données (X, Y), respectivement à au moins une adresse de courrier électronique spécifique au fournisseur de données (4_{X,A}, 4_{X,B}, 4_{Y,B}, 4_{Y,C}) du serveur d'information central (1) ;
- sauvegarde automatique des courriers électroniques de données (8) entrant dans le serveur d'information central (1), dans l'unité de mémoire des offres (7) ;
- réalisation de liaisons entre une multitude de systèmes de traitement de données (15) attribués respectivement à un récepteur de données (E) et disposant d'une interface web (14), et le serveur d'information central (1), en utilisant un lien du portail d'accès (3) appelé respectivement par le récepteur de données concerné ;
- sélection automatique, selon l'identité de chaque serveur d'accès (3), et autorisation d'accès, de courriers électroniques de données (8) sauvegardés dans l'unité de mémoire des offres (7), les hyperliens (18) existants dans les courriers électroniques de données (8) étant automatiquement reconnus et manipulés, où la sélection de l'hyperlien manipulé (19) par le récepteur de données (E) déclenche tout d'abord une procédure d'interrogation (20) pour la détermination d'un ensemble de données spécifiques à un récepteur (21), l'hyperlien manipulé (19) renvoyant à une adresse électronique de l'unité d'interface web (10) du serveur d'information central (1) qui est associée à une page web générée dynamiquement, la page web générée dynamiquement comportant des moyens d'interrogation pour la détermination de l'ensemble de données spécifiques à un récepteur (21), ainsi que des moyens de redirection, pour la redirection du récepteur de données (E) vers l'adresse électronique de départ, après l'exécution réussie de la procédure d'interrogation (20), de sorte que le récepteur de données (E) n'est redirigé vers l'adresse électronique de l'hyperlien (18) existant au départ dans le courrier électronique de données (8), qu'une fois que la procédure d'interrogation (20) a été exécutée avec succès ;
- appel des courriers électroniques de données (8) sélectionnés, validés et pourvus d'hyperliens (19) manipulés, par la multitude de récepteurs de données (E), par le biais de la toile.

8. Système d'information basé sur Internet, pour la représentation sélective de contenus de données (8) appelés par une multitude de récepteurs de données (E) et fournis par une multitude de fournisseurs de données (X, Y), comprenant :
- un serveur d'information central (1) avec une unité d'interface web (10), une unité de mémoire (6) comportant au moins une unité de mémoire des offres (7), pour la sauvegarde de courriers électroniques de données (8) venant des fournisseurs de données (X, Y), ainsi qu'un dispositif de sélection (13),
- une multitude de serveurs d'accès (3) disposant respectivement d'une interface web (11), tout en étant reliés à l'unité d'interface web (10) du serveur d'information central (1),
dans lequel les serveurs d'accès (3) ont accès à des contenus de données (8) spécifiques, stockés dans l'unité de mémoire des contenus de données (7) du serveur d'information central (1), et peuvent représenter ceux-ci dans leur page web (16),
**caractérisé en ce que**
le serveur d'information central (1) comporte en outre un dispositif de manipulation et de reconnaissance d'hyperlien (17), permettant de reconnaître automatiquement et donc de manipuler automatiquement les hyperliens (18) existants dans les contenus de données (8) ou les hyperliens associés aux contenus de données, **en ce que** le choix d'un hyperlien (19) existant dans un des contenus de données (8) représentés par le biais d'un serveur d'accès (3) et manipulé déclenche tout d'abord une procédure d'interrogation (20) pour la détermination d'un ensemble de données spécifique au récepteur (21), où l'hyperlien manipulé (19) renvoie à une adresse internet associée à une page web dynamique de l'unité d'interface web (10) du serveur d'information central (1), dans lequel la page web générée dynamiquement comporte des moyens d'interrogation pour la détermination de l'ensemble de données spécifiques à un récepteur (21), ainsi que des moyens de redirection pour la redirection du récepteur de données (E) vers l'adresse électronique de départ, après l'exécution réussie du procédé d'interrogation (20), de sorte que le récepteur de données (E) n'est redirigé vers l'adresse électronique de l'hyperlien (18) existant au départ dans le contenu de données qu'une fois que la procédure d'interrogation a été exécutée avec succès.
